# FASCICULE DE BREVET EUROPEEN

(11) **EP 1 451 482 B1**
(45) Date de publication et mention de la délivrance du brevet: **24.05.2006**
(21) Numéro de dépôt: 02799779.0
(22) Date de dépôt: 05.12.2002
(51) Int. Cl.: F16D 65/095, F16D 55/40, F16D 65/12

(54) **ETRIER DE FREINAGE A DISQUE POUR VEHICULE**
SCHEIBENBREMSSATTEL FÜR FAHRZEUGE
DISC BRAKE CALIPER FOR VEHICLE

(30) Priorité: 10.12.2001 FR 0116074
(43) Date de publication de la demande: 01.09.2004
(73) Titulaire: SA Beringer, 42940 Chatelneuf (FR)
(72) Inventeur: BERINGER, Gilbert, F-42940 Chatelneuf (FR)
(74) Mandataire: Thivillier, Patrick
(86) Numéro de dépôt international: PCT/FR2002/004189
(87) Numéro de publication internationale: WO 2003/050430

(56) Documents cités:
- EP-A- 1 074 757
- DE-A- 2 211 013
- DE-A- 2 849 952
- FR-A- 2 807 129
- GB-A- 2 320 299
- US-A- 4 401 194

## Description

L'invention se rattache au secteur technique des dispositifs de freinage pour tout type de véhicule, notamment voitures et motocyclettes.

D'une manière générale, ce type de dispositif met en oeuvre, pour chaque roue du véhicule considéré, un étrier de frein comprenant, d'une manière parfaitement connue pour un homme du métier, des pistons montés dans un carter. Le carter présente des agencements pour le montage, dans deux plans parallèles, de deux plaquettes assujetties aux pistons pour agir sur, au moins, un disque que présente la roue du véhicule. Les pistons sont reliés hydrauliquement à un maître-cylindre, pour être commandés par un ou des organes actionneurs manoeuvrables à la main, dans le cas d'une moto ou au pied, dans le cas d'un véhicule automobile.

L'invention concerne un étrier de frein comprenant au moins deux pistons opposés.

La pression envoyée dans l'étrier de frein par le maître-cylindre définit l'action de freinage, c'est-à-dire la décélération du véhicule suivie ou non de l'arrêt total de ce dernier.

Dans un étrier classique à pistons opposés, l'effort tangent des plaquettes est repris par le carter de l'étrier. Sous l'effet de la pression exercée, le carter et l'étrier ont tendance à s'ouvrir, d'une manière non négligeable, entraînant un frottement entre la plaquette et le carter, ce qui a pour effet de contrecarrer l'effort normal des pistons.

Cette déformation résulte du montage des plaquettes par rapport à l'étrier, qui n'est pas effectué pour tenir compte du phénomène d'hystérésis qui résulte du frottement entre la plaquette et le carter, sous l'effort de pression exercé par les pistons. Le conducteur ne peut donc pas tester la décélération avec précision, et diminuer, d'une manière sensible, l'effort tangent, sauf à relâcher, d'une manière importante, la pression en vue de diminuer les efforts. Il s'avère donc difficile de ressentir et de doser correctement le freinage.

Pour remédier à ces inconvénients, une solution avantageuse est déciite dans la demande de brevet FR-A-2 807 129, dont le demandeur de la présente est également titulaire. Il ressort de ce brevet que les agencements de montage des plaquettes sont constitués par des moyens aptes à reprendre l'effort tangent desdites plaquettes, de manière à éviter tout déplacement de ces dernières, au moment du freinage. Ces dispositions permettent d'éliminer, d'une manière très importante, les frottements directs ou indirects entre le carter et les plaquettes.

A partir de cet état de la technique, le problème que se propose de résoudre l'invention est d'améliorer, dans le cas d'un étrier de frein à pistons opposés, le montage des plaquettes, en ayant toujours pour objectif de diminuer, d'une manière très importante, les frottements, et donc l'hystérésis, mais également d'éviter tout phénomène de flexion et de cisaillement au niveau des agencements du montage des plaquettes par rapport à l'étrier, notamment dans le cas d'une application à des véhicules automobiles.

On a voulu également pouvoir appliquer l'invention dans le cas d'un système de freinage mettant en oeuvre au moins deux disques parallèles montés entre les plaquettes de frein.

Pour résoudre un tel problème, il a été conçu et mis au point un dispositif de freinage du type de ceux comprenant un étrier équipé d'au moins deux pistons opposés montés dans un carter présentant des agencements pour le montage, dans un plan parallèle, d'au moins deux plaquettes de frein assujetties auxdits pistons pour agir sur au moins un disque.
Selon l'invention, compte tenu du problème posé :
- le carter de l'étrier est composé de deux flasques parallèles réunis à chaque extrémité par un pontet transversal afin de délimiter une ouverture médiane pour le positionnement des plaquettes ;
- les plaquettes présentent, à chacune de leur extrémité supérieure des échancrures semi-circulaires formées à partir du chant transversal d'un élément support recevant un élément de friction;-les échancrures coopérent avec des axes faisant office de glissières;
- les axes sont engagés dans trous on chambrages formés dans l'épaisseur des flasques dans une empreinte rectiligne semi-circulaire formée dans l'épaisseur de chacun des pontets.

A partir de cette conception de base, le dispositif de freinage tel que défini et revendiqué, trouve une application particulièrement avantageuse pour le montage de deux disques parallèles montés chacun entre deux plaquettes de frein.

Pour résoudre un tei problème, les flasques présentent très sensiblement, dans leur partie médiane, un bossage pour le montage, deux à deux, d'un axe transversal apte à recevoir un élément support dont les extrémités coopèrent en appui avec les axes formant glissières, ledit élément support recevant, de part et d'autre, un élément de friction afin de délimiter, en combinaison avec les plaquettes latérales, deux espaces pour l'engagement de deux disques parallèles, les pistons étant montés en opposition pour agir simultanément sur les plaquettes latérales par rapport à l'élément support qui est immobilisé en translation sur l'axe transversal.

L'application du dispositif de freinage à deux disques parallèles, montés chacun entre deux plaquettes de frein, trouve une application pour un véhicule du type moto ou pour un véhicule du type automobile.

Pour résoudre le problème posé de tenir compte de l'usure des plaquettes, les deux disques sont solidaires d'une couronne que présente le moyeu de la roue considérée en combinaison avec des agencements complémentaires pour permettre un déplacement desdits disques par rapport à ladite couronne, lesdits agencements étant assujettis à des moyens aptes à créer un effort de frottement pour le déplacement des disques au fur et à mesure de l'usure des plaquettes.

Avantageusement, les moyens aptes à créer un effort de frottement sont constitués par au moins un organe élastique du type ressort conformé pour faire plaquer les agencements de la couronne contre ceux des disques.

Compte tenu des dispositions de montage des deux disques, il apparaît qu'une orientation de chaque disque est définie par les deux plaquettes correspondantes assurant ainsi un guidage constant de chacun des disques.

L'invention est exposée ci-après plus en détail à l'aide des figures des dessins annexés dans lesquels :

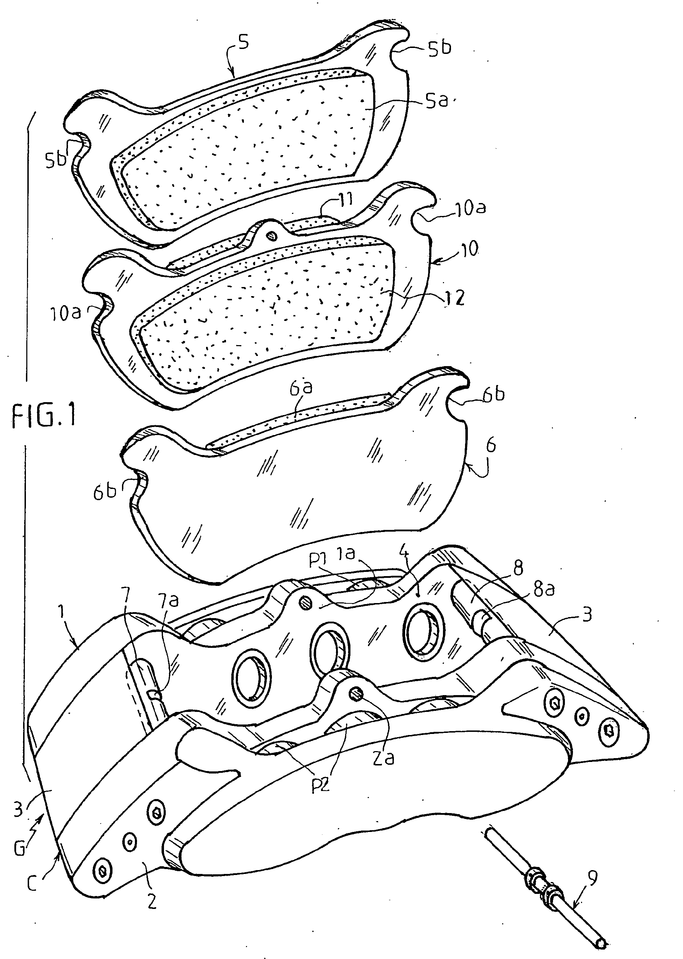

- la figure 1 est une vue en perspective d'une forme de réalisation préférée de l'étrier, avant mise en place des plaquettes, dans le cas d'un dispositif de freinage mettant en oeuvre deux disques ;

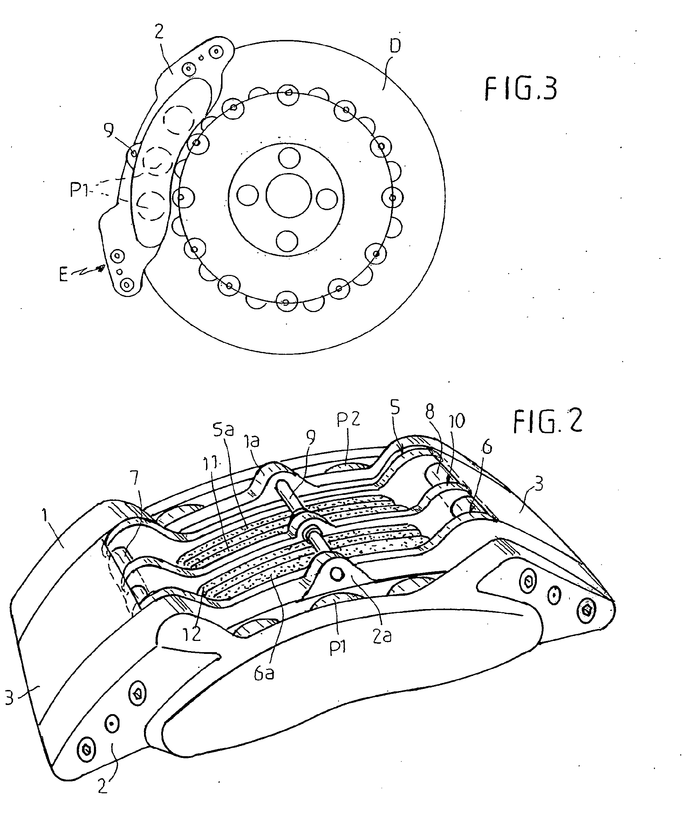

- la figure 2 est une vue en perspective après mise en place des plaquettes selon la figure 1 ;
- la figure 3 est une vue de face, à caractère schématique, de l'étrier avec un disque de frein ;

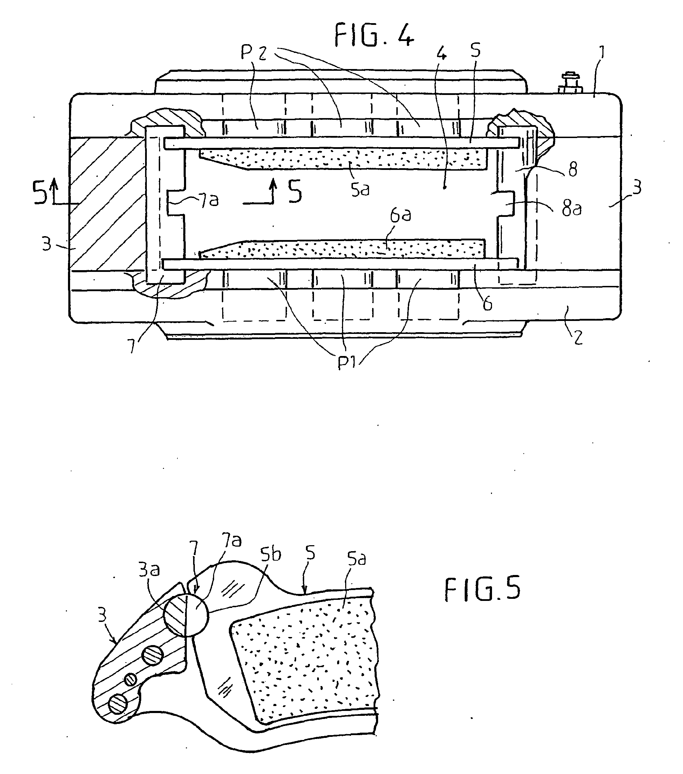

- la figure 4 est une vue en plan, avec coupe partielle, d'un étrier de frein dans le cas d'un disque simple ;

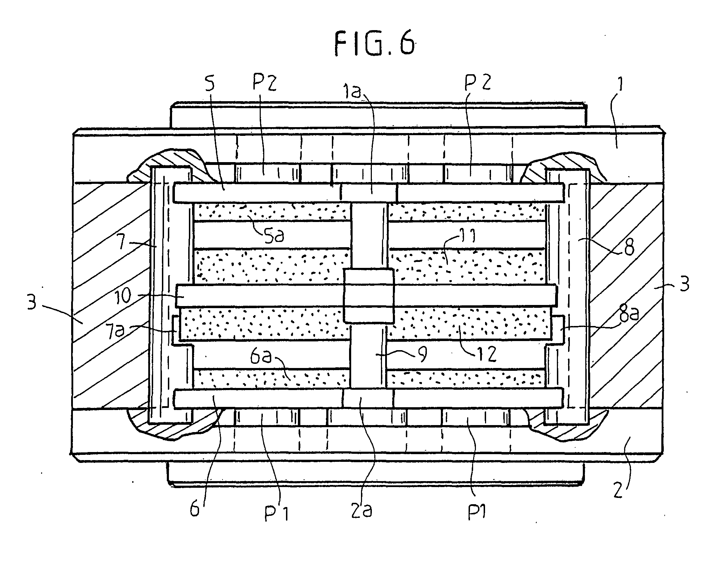

- la figure 5 est une vue en coupe transversale considérée selon la ligne 5-5 de la figure 4 ;
- la figure 6 est une vue en plan avec coupe partielle d'un étrier dans le cas d'un disque double ;
- la figure 7 est une vue en coupe transversale considérée selon la ligne 7-7 de la figure 6 ;
- la figure 8 est une vue en coupe transversale semblable à la figure 7, d'une autre forme de réalisation pour le déplacement avec frottement des disques et dans le cas d'une application à un véhicule de type motocyclette ;
- la figure 8A est une vue semblable à la figure 8 dans le cas d'une application à un véhicule du type automobile ;
- la figure 9 est une vue partielle de face correspondant à la figure 8, l'étrier n'étant pas représenté.

D'une manière connue, le dispositif de freinage comprend un étrier désigné dans son ensemble par (E) équipé d'au moins deux pistons notamment opposés (P1) et (P2) montés dans un carter (C) présentant des agencements pour le montage, dans deux plans parallèles, d'au moins deux plaquettes de frein assujetties aux pistons (P1) et (P2) pour agir sur au moins un disque (D). Dans la suite de la description, on désigne par « plaquette de frein» l'ensemble comprenant, d'une manière connue, un élément support sur lequel est fixé, notamment par collage ou autrement, une garniture de friction ou de freinage. Ces garnitures de freinage sont disposées de part et d'autre, en regard de chacune des faces du disque.

Dans l'exemple de réalisation illustré aux figures des dessins, le carter (C) de l'étrier est composé de deux flasques parallèles (1) et (2) réunis, à chaque extrémité, par un pontet transversal profilé (3). Chacun des deux pontets (3) délimite, en combinaison avec les flasques (1) et (2), une ouverture centrale et médiane (4) pour la mise en place des plaquettes de frein (5) et (6), et le passage du disque (D) entre les garnitures (5a) et (6a) desdites plaquettes. Les pontets (3) sont profilés en secteur de cercle, d'une manière correspondant sensiblement à la périphérie externe du disque.

Chacun des flasques (1) et (2) présente des agencements sous forme de chambrages notamment pour le montage, d'une manière étanche, des pistons opposés (P1) et (P2).

Par exemple, chacun des flasques (1) et (2) présente trois pistons.

Selon une caractéristique importante de l'invention, les plaquettes de frein (5) et (6) présentent, à chacune de leur extrémité supérieure, des agencements pour être supportés et guidés par des axes (7) et (8) faisant office de glissières, en étant partiellement intégrés sur la totalité de leur longueur dans l'épaisseur du carter et dans des zones où il n'y a pas de déformation. Ces dispositions permettent de réduire, d'une manière importante, le phénomène d'hystérésis résultant du frottement entre les plaquettes et le carter.

Comme le montrent les figures des dessins, les axes (7) et (8) sont engagés dans des trous ou chambrages formés dans l'épaisseur des flasques (1) et (2), et dans une empreinte rectiligne semi-circulaire (3a) formée dans l'épaisseur de chacun des pontets (3). Ces dispositions de montage évitent toute flexion des axes (7) et (8) qui sont parfaitement en appui, sur la totalité de leur longueur, dans les agencements correspondants de l'étrier.

On observe que les axes (7) et (8) sont intégrés dans les empreintes correspondantes (3a) des pontets (3), sur sensiblement une demi-circonférence, de manière à laisser subsister au niveau des bords transversaux de l'ouverture centrale (4), une partie d'appui suffisante pour les plaquettes de frein (5) et (6). A cet égard, chacune des plaquettes (5) et (6) présente, au niveau de sa partie support, des échancrures (5b) et (6b) semi-circulaires formées à partir du chant transversal de l'élément support recevant l'élément de friction ou de freinage (5a) et (6a).

Chaque axe (7) et (8) présente une encoche (7a) et (8a) pour la mise en place des plaquettes (5) et (6). En effet, il saffit d'enfiler verticalement chacune des plaquettes, dont les bords transversaux sont inclinés, dans les encoches (7a) et (8a) des axes (7) et (8) disposées en correspondance, jusqu'à ce que les échancrures (5a) et (6a) des plaquettes (5) et (6) viennent en appui sur les portées en débordement des axes (7) et (8), puis de faire glisser chacune des plaquettes en direction de chacun des flasques (1) et (2) pour les soumettre à l'action des pistons correspondants.

A partir de cette conception de base de l'étrier et du montage spécifique des plaquettes en combinaison avec les axes (7) et (8), la conception de l'étrier peut avantageusement être utilisée dans le cas d'un système de freinage mettant en oeuvre deux disques parallèles et indépendants (D1) et (D2).

La conception de base du carter de l'étrier avec les axes (7) et (8) demeure la même. Seul, éventuellement, les pontets (3) sont de largeur plus importante afin de tenir compte de l'augmentation de l'encombrement résultant de la présence des deux disques parallèles (D1) et (D2).

Les flasques (1) et (2) présentent, très sensiblement dans leur partie médiane, un bossage (1a) (2a) pour le montage, deux à deux, d'un axe transversal (9). Cet axe (9) présente, très sensiblement dans sa partie médiane, des agencements pour le montage d'un élément support (10) recevant, de part et d'autre, un élément de friction (11) et (12) afin de former, indirectement, deux plaquettes de frein centrales solidaires. Les éléments de friction (11) et (12) délimitent, en combinaison avec les éléments de friction (5a) et (6a) des plaquettes latérales (5) et (6), deux espacements pour l'engagement des deux disques parallèles (D1) et (D2).

De la même façon que les plaquettes (5) et (6), l'élément support (10) recevant les deux plaquettes (11) et (12) présente, à chacune de ses extrémités, des échancrures semi-circulaires (10a) formées à partir du chant transversal correspondant. Ces échancrures coopèrent, en appui, avec les portées débordantes des axes (7) et (8).

A partir de cette conception de base de l'étrier et d'une utilisation de deux disques parallèles (D1) et (D2), il en résulte un encombrement en largeur plus important, de sorte qu'il convient de distinguer l'application à un véhicule du type moto de celle d'un véhicule du type automobile.

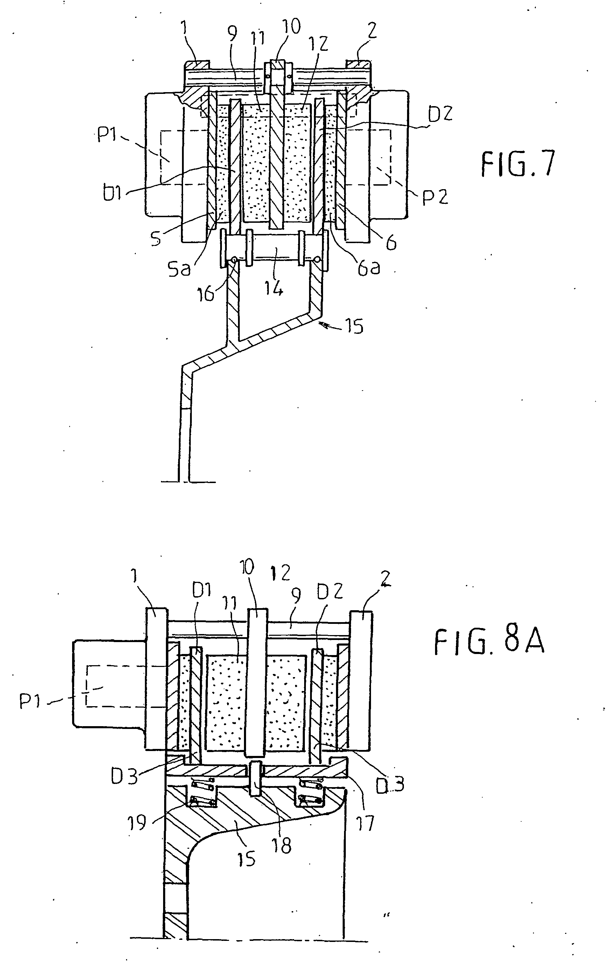

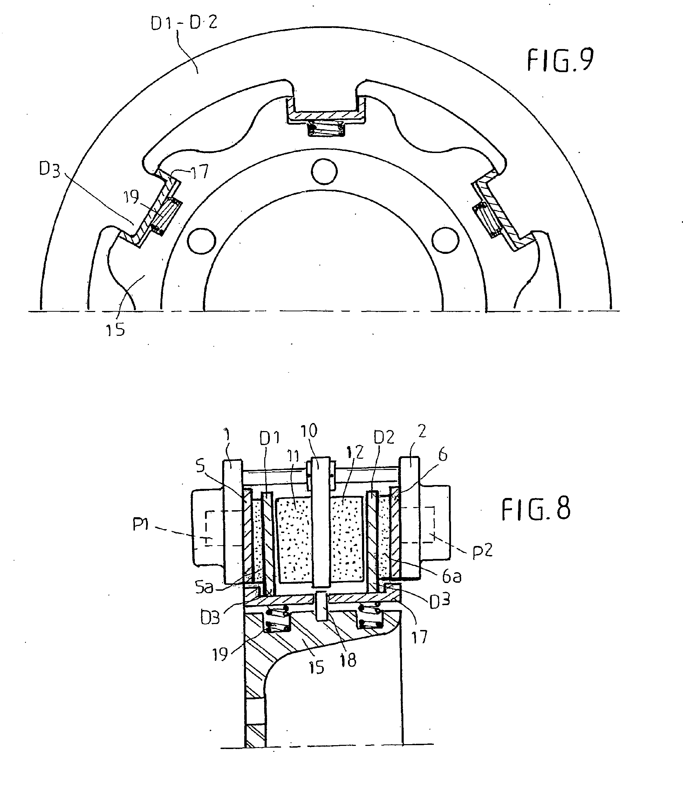

Dans le cas d'un véhicule du type moto, chacun des flasques (1) et (2) présente un, mais généralement plusieurs pistons (P1) et (P2). Les pistons (P1) et (P2) sont montés en opposition pour agir simultanément sur les plaquettes latérales (5) et (6) par rapport à l'élément support (10) qui est immobilisé en translation sur l'axe transversal (9). On renvoi aux figures 7 et 8 par exemple.

Dans le cas d'une application à un véhicule automobile, l'un des flasques seulement, à savoir le flasque (1) situé du côté intérieur du moyeu portant la roue, présente un, mais généralement plusieurs pistons, pour agir sur la plaquette latérale correspondante (5). Dans ce cas, l'élément support (10) recevant les deux plaquettes (11) et (12), est monté avec capacité de déplacement en translation sur l'axe transversal (9). Le flasque (2), situé du côté extérieur, présente donc un encombrement réduit en largeur par rapport au flasque (1) étant donné que ledit flasque (2) ne présente pas de piston (figure 8A).

Les deux disques (D1) et (D2) sont montés avec capacité de déplacement limité sur des agencements disposés périphériquement à un moyeu ou couronne (15) solidaire de la roue du véhicule considéré. Dans ce but, les disques (D1) et (D2) et la couronne (15) présentent des agencements complémentaires assujettis à des moyens aptes à créer une précontrainte sous forme d'un effort de frottement pour le déplacement des disques au fur et à mesure de l'usure des plaquettes (5) (11) et (6) (12).

Dans une forme de réalisation illustrée à la figure 7, les agencements sont constitués par des douilles (14) rendues solidaires, à intervalles réguliers de préférence, de la périphérie de la couronne (15) pour être engagées dans des échancrures semi-circulaires, que présente le bord circulaire interne des disques réalisés sous forme de couronne. Les disques (D1) et (D2) et les douilles (14) sont assujettis à au moins un organe élastique du type ressort (16) conformé pour faire plaquer les douilles (14) contre les échancrures semi-circulaires des disques. Ces douilles peuvent être assujetties à un organe élastique indépendant. L'effort de frottement en résultant s'oppose donc au déplacement du disque.

Dans une autre forme de réalisation illustrée aux figures 8, 8A et 9 des dessins, et qui trouve une application avantageuse dans le cas d'un véhicule automobile, les deux disques (D1) et (D2) sont constitués par une couronne dont le bord circulaire interne présente, régulièrement répartis sur la circonférence, des bossages (D3) engagés et guidés dans un étrier (17) de section transversale en U. Cet étrier (17) est monté dans un logement de forme complémentaire formé à partir du bord externe de la couronne (15) du moyeu. Cet étrier est bloqué en translation par un pion (18), et est assujetti à des ressorts (19) pour assurer, comme dans la réalisation précédente, une précontrainte et créer un effort de frottement pour éviter le déplacement axial des disques au fur et à mesure de l'usure des plaquettes. Les ressorts (19) ont pour effet de faire plaquer l'étrier contre les bossages (D3) des disques. On observe également que ces étriers protègent la couronne ou le moyeu contre tout éventuel effet de matage des disques sous l'effort de freinage.

Comme déjà indiqué, dans le cas d'une application à un véhicule automobile, en considérant l'espace réduit qui existe entre le moyeu et l'intérieur de la roue, le dispositif de freinage sera avantageusement du type de celui illustré figure 8A.

Les avantages ressortent bien de la description.

## Revendications

1. Dispositif de freinage d'un véhicule comprenant un étrier équipé d'au moins deux pistons opposés (P1) et (P2) montés dans un carter (C) présentant des agencements pour le montage, dans un plan parallèle, d'au moins deux plaquettes de frein (5) et (6) assujetties auxdits pistons pour agir sur au moins un disque,
**caractérisé en ce que** :
- le carter de l'étrier est composé de deux flasques parallèles (1) et (2) réunis à chaque extrémité par un pontet transversal (3) afin de délimiter une ouverture médiane (4) pour le positionnement des plaquettes (5) et (6) ;
- les plaquettes (5) et (6) présentent, à chacune de leur extrémité supérieure, des échancrures semi-circulaires (5b) et (6b) formées à partir du chant transversal d'un élément support recevant un élément de friction (5a) et (6a) ;
- les échancrures (5b) et (6b) coopèrent avec des axes (7) et (8) faisant office de glissières ;
- les axes (7) et (8) sont, engagés dans trous ou chambrages formés dans l'épaisseur des flasques (1) et (2) dans une empreinte rectiligne semi-circulaire (3a) formée dans l'épaisseur de chacun des pontets (3)

2. Dispositif selon la revendication 1, **caractérisé en ce que** les flasques (1) et (2) présentent très sensiblement, dans leur partie médiane, un bossage (1a) et (2a) pour le montage, deux à deux, d'un axe transversal (9) apte à recevoir un élément support (10) dont les extrémités coopèrent en appui avec les axes (7) et (8) formant glissières, ledit élément support (10) recevant, de part et d'autre, un élément de friction (11) et (12) afin de délimiter, en combinaison avec les plaquettes latérales (5) et (6), deux espaces pour l'engagement de deux disques parallèles (D1) et (D2), les pistons (P1) et (P2) montés en opposition, agissant simultanément sur les plaquettes latérales (5) et (6) par rapport à l'élément support (10) qui est immobilisé en translation sur l'axe transversal (9).

3. Dispositif selon la revendication 2, **caractérisé en ce que** les deux disques (D1) et (D2) sont montés sur une couronne ou moyeu (15), avec capacité de déplacement, en combinaison avec des agencements complémentaires assujettis à des moyens aptes à créer un effort de frottement pour le déplacement des disques (D1) et (D2), au fur et à mesure de l'usure des plaquettes.

4. dispositif selon la revendication **3, caractérisé en ce que** les moyens aptes à créer un effort de frottement sont constitués par au moins un organe élastique du type ressort conformé pour mettre en pression les agencements complémentaires.

5. Dispositif selon la revendication **3, caractérisé en ce que** les agencements sont constitués par des douilles (14) disposées périphériquement, à intervalles réguliers, sur la couronne et engagées dans des berceaux de forme complémentaire qui présente périphériquement des agencements de chacun des disques.

6. Dispositif selon la revendication 3**, caractérisé en ce que** les agencements sont constitués par des étriers (17) de section transversale en U montés dans des agencements de forme complémentaire formés à la périphérie de la couronne, chacun desdits étriers (17) étant assujetti à au moins un organe élastique (18) pour être plaqué sur des bossages (D3) que présente chacun des disques (D1) et (D2), et engagés dans lesdits étriers.

## Claims

1. A braking device for a vehicle comprising a brake calliper equipped with at least two opposed pistons (P1) and (P2) installed in a housing (C) having features making it possible to mount, in a parallel plane, at least two disc brake pads (5) and (6) slaved to said pistons in order to act on at least one disc,
**characterised in that**:
- the housing of the brake calliper comprises two parallel flanges (1) and (2) joined at each end by a transverse bridge (3) in order to delimit a middle opening (4) for positioning the disc brake pads (5) and (6);
- disc brake pads (5) and (6) having, on each of their upper ends, semicircular notches (5b) and (6b) formed on the transverse edge of a support element that accommodates a friction component (5a) and (6a);
- the notches (5b) and (6b) cooperate with shafts (7) and (8) acting as slides;
- shafts (7) and (8) fit into holes or recesses formed in the thickness of flanges (1) and (2) in a straight semicircular channel (3a) formed in the thickness of each of the bridges (3).

2. A device as claimed in claim 1, **characterised in that** the middle parts of flanges (1) and (2) have very substantially a bump (1a) and (2a) for fitting, two by two, a transverse shaft (9) capable of accommodating a support element (10) the ends of which bear on shafts (7) and (8) forming slides, said support element (10) accommodating, on either side, a friction component (11) and (12) in order to delimit, in combination with lateral disc brake pads (5) and (6), two gaps for accommodating two parallel discs (D1) and (D2), pistons (P1) and (P2) mounted in opposition acting simultaneously on the lateral disc brake pads (5) and (6) relative to support element (10) which is translationally fixed on transverse shaft (9).

3. A device as claimed in claim 2, **characterised in that** the two discs (D1) and (D2) are mounted on a crown or hub (15) with the ability to move, in combination with additional features slaved to means suitable for creating a friction force to move discs (D1) and (D2) gradually as the disc brake pads wear down.

4. A device as claimed in claim 3, **characterised in that** the means suitable for creating a friction force consist of at least one elastic device of the spring type designed to push against the additional features.

5. A device as claimed in claim 3, **characterised in that** the features consist of bushes (14) peripherally arranged at regular intervals over the crown and fitting into cradles of matching shape which features on each of the discs have on their periphery.

6. A device as claimed in claim 3, **characterised in that** the features consist of brake callipers (17) having a U-shape cross section mounted on the features of matching shape formed on the periphery of the crown, each of said brake callipers (17) being slaved to at least one elastic device (18) so that it is pressed against bumps (D3) which each of the discs (D1) and (D2) has and which fit into said brake callipers.

## Patentansprüche

1. Bremsvorrichtung für ein Fahrzeug mit einem Bremssattel, der mit mindestens zwei einander gegenüberliegenden Kolben (P1) und (P2) ausgestattet ist, die in einem Gehäuse (C) montiert sind, das Anordnungen für die Montage von mindestens zwei Bremsbackensegmenten (5) und (6) in einer parallelen Ebene aufweist, die an den Kolben befestigt sind, um auf mindestens eine Scheibe zu wirken,
**dadurch gekennzeichnet, dass** :
- das Gehäuse des Bremssattels aus zwei parallelen Flanschen (1) und (2) besteht, die an jedem Ende über eine querverlaufende Brücke (3) verbunden sind, um eine Öffnung in der Mitte (4) für die Positionierung der Bremsbackensegmente (5) und (6) zu begrenzen ;
- die Bremsbackensegmente (5) und (6) besitzen jeweils an ihrem oberen Ende halbkreisförmige Aussparungen (5b) und (6b), die ausgehend von der querverlaufenden Kante eines Tragelementes gebildet werden, das ein Reibelement (5a) und (6a) aufnimmt ;
- die halbkreisförmigen Aussparungen (5b) und (6b) wirken mit den Achsbolzen (7) und (8) zusammen, die als Führungsschienen dienen ;
- die Achsbolzen (7) und.(8) greifen in Löcher oder Einsenkungen ein, die in den Flanschen (1) und (2) in einer geraden, halbkreisförmigen Vertiefung (3a) gebildet werden, welche wiederum in jeder der Brücken (3) gebildet wird.

2. Vorrichtung nach Anspruch 1, **dadurch gekennzeichnet, dass** die Flansche (1) und (2) im wesentlichen in ihrem mittleren Teil einen Vorsprung (1a) und (2a) für die paarweise Montage eines querverlaufenden Achsbolzens (9) besitzen, der ein Tragelement (10) aufnehmen kann, dessen Enden sich auf den Achsbolzen (7) und (8) abstützen, die Führungsschienen bilden, wobei das Tragelement (10) zu beiden Seiten ein Reibelement (11) und (12) aufnimmt, um in Kombination mit den seitlichen Bremsbackensegmenten (5) und (6) zwei Zwischenräume für den Eingriff von zwei parallelen Scheiben (D1) und D2) zu begrenzen, wobei die einander gegenüberliegenden Kolben (P1) und (P2) gleichzeitig auf die seitlichen Bremsbackensegmente (5) und (6) gegenüber dem Tragelement (10) wirken, das an dem querverlaufenden Achsbolzen (9) verriegelt ist.

3. Vorrichtung nach Anspruch 2, **dadurch gekennzeichnet, dass** die beiden Scheiben (D1) und (D2) an einem Kranz oder an einer Nabe (15) verschiebbar montiert sind, und zwar in Kombination mit zusätzlichen Anordnungen, die mit Elementen verbunden sind, die für die Verschiebung der Scheiben (D1) und (D2) entsprechend der Abnutzung der Bremsbackensegmente eine Reibwirkung erzeugen können.

4. Vorrichtung nach Anspruch 3, **dadurch gekennzeichnet, dass** die Elemente, die eine Reibwirkung erzeugen können, aus mindestens einem elastischen Element nach Art einer Feder bestehen, die derart ausgebildet ist, dass sie die zusätzlichen Anordnungen unter Druck setzt.

5. Vorrichtung nach Anspruch 3, **dadurch gekennzeichnet, dass** die Anordnungen aus Hülsen (14) bestehen, die in regelmäßigen Abständen am Umfang des Kranzes angeordnet sind und in zusätzlich gebildete Lagerungen eingreifen, die an jeder der Scheiben am Umfang Anordnungen aufweisen.

6. Vorrichtung nach Anspruch 3, **dadurch gekennzeichnet, dass** die Anordnungen aus Bremssätteln (13) mit U-förmigem Querschnitt bestehen, die in zusätzlich gebildeten Anordnungen montiert sind, welche am Umfang des Kranzes gebildet werden, wobei jeder der Bremssättel (17) mit mindestens einem elastischen Element (18) verbunden ist, und gegen die Vorsprünge (D3) gedrückt wird, die sich an jeder der Scheiben (D1) und (D2) befinden, und in die Bremssättel eingreifen.
